# EUROPÄISCHE PATENTSCHRIFT

(11) **EP 4 728 295 B1**
(45) Veröffentlichungstag und Bekanntmachung des Hinweises auf die Patenterteilung: **12.08.2026**
(21) Anmeldenummer: 25766223.9
(22) Anmeldetag: 05.09.2025
(51) Int. Cl.: G01S 7/537, G01S 7/539

(54) **VERFAHREN ZUR ERSTELLUNG VON SYNTHETISCHEN TRAININGSDATEN**
METHOD FOR CREATING SYNTHETIC TRAINING DATA
PROCÉDÉ DE CRÉATION DE DONNÉES D'APPRENTISSAGE SYNTHÉTIQUES

(30) Priorität: 09.09.2024 DE 102024004013
(43) Veröffentlichungstag der Anmeldung: 22.04.2026
(73) Patentinhaber: TKMS ATLAS ELEKTRONIK GmbH, 28309 Bremen (DE); thyssenkrupp AG, 45143 Essen (DE)
(72) Erfinder: WIEGAND, Till, 28215 Bremen (DE); LÜTERS, Michelangelo, 27283 Verden (DE); SIANTIDIS, Konstantinos, 28215 Bremen (DE); KLUGE, Eike, 28197 Bremen (DE); HORSTMANN, Marten, 26133 Oldenburg (DE); MEYER, Ralf Michael, 27798 Hude (DE); KRAMER, Alexander, 28865 Lilienthal (DE); MÜLLER, Nils, 28205 Bremen (DE); VON OEHSEN, Tim, 28217 Bremen (DE); REERMANN, Jens, 28355 Bremen (DE)
(74) Vertreter: thyssenkrupp Intellectual Property GmbH
(86) Internationale Anmeldenummer: PCT/EP2025/075334
(87) Internationale Veröffentlichungsnummer: WO 2026/052784

(56) Entgegenhaltungen:
- GOLDWATER MARK ET AL: "Machine-learning-based simultaneous detection and ranging of impulsive baleen whale vocalizations using a single hydrophone", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 153, no. 2, 13 February 2023 (2023-02-13), pages 1094 - 1107, XP012272318, ISSN: 0001-4966, [retrieved on 20230213], DOI: 10.1121/10.0017118
- PORTER M B: "The KRAKEN Normal Mode Program", 22 May 1992 (1992-05-22), XP093343315, Retrieved from the Internet <URL:https://apps.dtic.mil/sti/tr/pdf/ADA252409.pdf> [retrieved on 20251203]
- YANG WUYI ET AL: "Transfer learning for denoising the echolocation clicks of finless porpoise (Neophocaena phocaenoides sunameri) using deep convolutional autoencoders", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 150, no. 2, 17 August 2021 (2021-08-17), pages 1243 - 1250, XP012258983, ISSN: 0001-4966, [retrieved on 20210817], DOI: 10.1121/10.0005887
- DAN STOWELL: "Computational bioacoustics with deep learning: a review and roadmap", ARXIV.ORG, CORNELL UNIVERSITY LIBRARY, 201 OLIN LIBRARY CORNELL UNIVERSITY ITHACA, NY 14853, 13 December 2021 (2021-12-13), XP091121800

## Beschreibung

Die Erfindung bezieht sich auf ein Verfahren zur Erstellung von synthetischen Trainingsdaten, die zum Trainieren eines Modells zur Detektion von Ereignissen in Sonardaten mittels maschinellem Lernen verwendet werden.

Derzeit werden Ereignisse z.B. mittels eine Energiedetektion unter Verwendung von Clusterbildungen im Frequenzbereich detektiert. Diese Ereignisdetektion ist jedoch anfällig für die Detektion von falsch positiven bzw. uninteressanten Ereignissen, da neben der Energie in der Regel keine weiteren Faktoren berücksichtigt werden. Es gibt nunmehr die Idee, die Ereignisdetektion mittels künstlicher Intelligenz, d.h. einem Modell, das mittels maschinellem Lernen erzeugt worden ist, durchzuführen. Es hat sich jedoch herausgestellt, dass das Vorbereiten der Sonardaten für das Training des Modells sehr aufwendig ist. Insbesondere müssen die Ereignisse in den Sonardaten korrekt bestimmt, d.h. gelabelt, werden, damit das Modell auf die Ereignisse trainiert werden kann. Um eine gute Generalisierungsfähigkeit des Modells zu erhalten, ist es notwendig, eine große Anzahl von Trainingsdaten vorzubereiten. Dies erschwert das Training ungemein.

GOLDWATER MARK ET AL: "Machine-learning-based simultaneous detection and ranging of impulsive baleen whale vocalizations using a single hydrophone", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, Bd. 153, Nr. 2, 13. Februar 2023 (2023-02-13), Seiten 1094-1107, XP012272318, ISSN: 0001-4966, DOI: 10.1121/10.0017118 offenbart eine simultane Erkennung und Entfernungsmessung impulsiver Lautäußerungen von Bartenwalen mittels maschinellem Lernen unter Verwendung eines einzelnen Hydrophons.

Porter M B: "The KRAKEN Normal Mode Program", 22. Mai 1992 (1992-05-22), XP093343315, Gefunden im Internet: https://apps.dtic.mil/sti/tr/pdf/ADA252409.pdf offenbart ein Modell, um Ozean-spezifische akustische Probleme zu modellieren.

YANG WUYI ET AL: "Transfer learning for denoising the echolocation clicks of finless porpoise (Neophocaena phocaenoides sunameri) using deep convolutional autoencoders", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, Bd. 150, Nr. 2, 17. August 2021 (2021-08-17), Seiten 1243-1250, XP012258983, ISSN: 0001-4966, DOI: 10.1121/10.0005887 offenbart ein Verfahren zum Transferlernen zur Rauschunterdrückung bei den Echoortungsklicken von Schweinswalen ohne Flossen unter Verwendung tiefer Faltungs-Autoencoder.

DAN STOWELL: "Computational bioacoustics with deep learning: a review and roadmap", ARXIV.ORG, CORNELL UNIVERSITY LIBRARY, 201 OLIN LIBRARY CORNELL UNIVERSITY ITHACA, NY 14853, 13. Dezember 2021 (2021-12-13), XP091121800 offenbar computergestützte Bioakustik mit Deep Learning.

Die Aufgabe der vorliegenden Erfindung besteht deshalb darin, ein verbessertes Konzept für das Erstellen von Trainingsdaten für die Detektion von Ereignissen in Sonardaten zu schaffen.

Die Aufgabe wird durch den Gegenstand der unabhängigen Patentansprüche gelöst. Weitere vorteilhafte Ausführungsformen sind der Gegenstand der abhängigen Patentansprüche.

Ausführungsbeispiele zeigen ein Verfahren zur Erstellung von synthetischen Trainingsdaten, die zum Trainieren eines Modells zur Detektion von Ereignissen in Sonardaten mittels maschinellem Lernen verwendet werden. D.h., das Modell wird mittels maschinellem Lernen unter Verwendung der mit diesem Verfahren erzeugten Trainingsdaten erzeugt. Das Verfahren weist zumindest die folgenden Schritte a) bis e) auf.

In Schritt a) erfolgt das Erzeugen eines Signals eines zu detektierenden Ereignisses als Zeitreihe von Datenpunkten. Das Signal kann auch als Ereignissignal bezeichnet werden. D.h. es kann ein Biosignal (z.B. Walgesang), ein Echo eines Aktivsonars (z.B. in Form eines frequenzmodulierten Pulses (FM) oder eines continuous wave (CW) Pulses) oder auch jedes andere beliebige zu detektierende Signal erzeugt werden. Vorteilhafterweise ist das zu detektierende Signal jedoch zeitlich begrenzt. Das Erzeugen des Signals kann künstlich erfolgen oder durch Extraktion aus realen Sonardaten. Die Extraktion aus realen Sonardaten umfasst insbesondere das Herausfiltern des Hintergrundrauschens und/oder der Einflüsse der Elektronik auf die realen Sonardaten.

In Schritt b) erfolgt das Falten des Signals mit einer Abbildung eines Sonarkanals, um ein empfangenes Signal zu simulieren. Als Abbildung des Sonarkanals wird z.B. die Impulsantwort des Sonarkanals verwendet. Bevorzugt wird der Sonarkanals zufällig erzeugt oder zufällig ausgewählt. So haben die Sonarkanäle, z.B. in Abhängigkeit von Salzgehalt, Temperatur, Wassertiefe oder Umweltverhältnissen unterschiedliche Eigenschaften. Die Sonarkanäle unterscheiden sich beispielsweise hinsichtlich des Nachhalls oder der Position und Anzahl von Mehrwegereflexionen. Eine beispielhafte Impulsantwort eines Sonarkanals mit diskreten Mehrwegen kann wie folgt verwendet werden: h(n) = Σ a(d)δ (n - N_{d}) mit d=0... N, wobei δ die Dirac-Funktion bezeichnet.

In Schritt c) erfolgt das Erzeugen eines Rauschsignals. Das Rauschsignal bildet das Hintergrundrauschen unter Wasser ab. Es kann ein beliebiges Rauschen, beispielsweise weißes Rauschen oder farbiges Rauschen wie z.B. 1/f-Rauschen, verwendet werden.

In Schritt d) erfolgt das (additive) Mischen des Rauschsignals mit dem simulierten empfangenen Signal, um ein gemischtes Signal zu erhalten. D.h., das Rauschsignal wird mit dem Ereignissignal gemischt. Insbesondere erfolgt die Mischung nach dem Falten des Sonarkanals mit dem Ereignissignal.

In Schritt e) erfolgt das Anwenden einer nichtlinearen Gewichtung auf das gemischte Signal um die synthetischen Trainingsdaten zu erhalten. Als nichtlineare Gewichtung kann z.B. eine im Wertebereich zunächst im Wesentlichen lineare, für betragsmäßig größer werdende Werte asymptotisch begrenzte oder zumindest nur sehr langsam ansteigende, monoton steigende Funktion, verwendet werden. Beispielhaft kann die Umkehrfunktion eines Polynoms mit ausschließlich ungeraden Exponenten verwendet werden, wobei der Grad des Polynoms mindestens 3, bevorzugt mindestens 5, weiter bevorzugt mindestens 7 ist. Es versteht sich, dass die Funktion beispielsweise mittels entsprechender Koeffizienten oder durch den Grad des Polynoms an die physikalischen Gegebenheiten anzupassen sind. Beispielsweise wird die Funktion umso langsamer ansteigend, je größer der Grad des Polynoms ist. Über den Koeffizienten des geringsten Glieds, bevorzugt des linearen Glieds, kann der im Wesentlichen lineare Teil des Wertebereichs eingestellt werden. Ebenso können z.B. abschnittweise definierte Funktionen verwendet werden. Durch die nichtlineare Gewichtung wird die Nichtlinearität, insbesondere das Clipping bzw. die Sättigung, der Empfangselektronik berücksichtigt.

Idee ist es somit, eine möglichst realitätsnahe Abbildung des ursprünglichen (Ereignis-) Signals zu erzeugen. Die Abbildung soll das Sonarsignal nachbilden, das entstehen würde, wenn das Ereignissignal mittels Aktivsonar ausgesendet würde. Da sich hier zu unterschiedlichen Zeitpunkten auch unterschiedliche Sonarsignale ergeben würden, ist auf eine große Varianz beim Rauschen und beim Sonarkanal zu achten, um eine möglichst gute Generalisierungsfähigkeit des Modells zu erhalten. Somit können große Mengen an Trainingsdaten erzeugt werden, ohne darauf angewiesen zu sein, ohne reale, d.h. aufgezeichnete, Trainingsdaten zu besitzen. Ein solches Modell kann dann an beliebige Kunden vermarktet werden, ohne das Modell mit den Daten des Kunden jeweils neu trainieren zu müssen.

In Ausführungsbeispielen kann zwischen Schritt a) und Schritt b) ein Schritt a1) ausgeführt werden. In Schritt a1) erfolgt das Anwenden einer nichtlinearen Gewichtung auf das (Ereignis-) Signal, um ein gewichtetes Signal zu erhalten und wobei in Schritt b) statt des Signals das gewichtete Signal verwendet wird. Als nichtlineare Gewichtung kann z.B. die Umkehrfunktion eines Polynoms mit ausschließlich ungeraden Exponenten verwendet werden. Durch die nichtlineare Gewichtung in Schritt a1) wird die Nichtlinearität, insbesondere das Clipping bzw. die Sättigung, der Sendeelektronik berücksichtigt. Somit werden die Trainingsdaten noch etwas exakter an reale Sonardaten angenähert.

Ferner ist ein Verfahren zur Detektion (optional auch Klassifikation) von Ereignissen in Sonardaten mittels eines Modells, das mit den erzeugten Trainingsdaten mittels maschinellem Lernen erzeugt worden ist, offenbart. Die Detektion der Ereignisse kann durch Anwenden des Modells auf eine Zeitreihe von Sonardaten erfolgen. Die Zeitreihe von Sonardaten kann mit Wasserschallwandlern aufgezeichnet werden. Optional können zum maschinellen Lernen des Modells ergänzend reale Sonardaten verwendet werden.

Das Verfahren zur Detektion von Ereignissen in Sonardaten umfasst das Anwenden des mittels maschinellem Lernen erzeugten Modells auf die Zeitreihe von Sonardaten, um mittels des Modells ein Ereignis oder eine Mehrzahl von Ereignissen in den Sonardaten zu detektieren. D.h., die Sonardaten werden in einer zeitlichen Abfolge dem Modell zur Verfügung gestellt, um die Ereignisdetektion durchzuführen. Eine visuelle Darstellung einer solchen Zeitreihe ist beispielsweise die Wasserfalldarstellung. Die Verwendung des Modells hat ferner den Vorteil, dass die Ereignisse unmittelbar kategorisiert werden können, beispielsweise in continious wave (CW) oder frequenzmodulierte (FW) Ereignisse bzw. interessante und uninteressante Ereignisse. Uninteressante Ereignisse können dann beispielsweise direkt unterdrückt, d.h. nicht angezeigt bzw. ausgegeben werden. Alternativ erfolgt eine Farbdarstellung der Ereignisse, wobei interessante Ereignisse in z.B. Signalfarben und uninteressante Ereignisse z.B. in Pastellfarben dargestellt werden. Darüber hinaus erlaubt der Ansatz der Ereignisdetektion mit dem Modell die Überwachung der akustischen Qualität der Sonardaten. Die akustische Qualität der Sonardaten kann, insbesondere bei Sonarbojen, aufgrund der unterschiedlichen Charakteristiken der Funkstörungen zu den Wasserschallsignalen ermittelt werden. Insbesondere zeichnen sich Funkstörungen durch eine im Vergleich größere Signalenergie und schnelle Änderungen aus. Ferner hat sich herausgestellt, dass Ereignisse mittels des Modells unterhalb von klassischen Detektionsschwelle zuverlässig erkannt werden.

So kann die Ereignisdetektion mittels einer künstlichen Intelligenz in den Sonardaten vorgenommen werden. Die künstliche Intelligenz umfasst das Modell, das optional eine Mehrzahl von, insbesondere unterschiedlichen, Teil-Modellen umfassen. Ein (Teil-) Modell beschreibt einen trainierten Algorithmus. Als Algorithmus eignen sich die meisten gängigen bekannten Algorithmen, insbesondere künstliche neuronale Netze, Bayes Klassifikatoren, Support Vektor Maschinen (SVM), lineare Regression, bevorzugt jedoch Deep-Learning-Ansätze wie z.B. auf Transformertechnologie beruhende künstliche neuronale Netze und/oder ein faltendes (convolutional) künstliches neuronales Netz (CNN), etc. Umfasst das Modell mehrere Teil-Modelle zur Ereignisdetektion können gleichartige Algorithmen (z.B. verschiedene künstliche neuronale Netze), aber auch unterschiedliche Algorithmen (z.B. ein künstliches neuronales Netz und eine lineare Regression) kombiniert werden.

Insbesondere hat es sich herausgestellt, dass keine speziellen Algorithmen verwendet werden brauchen, um die Ereignisdetektion durchzuführen. Es ist ausreichend, zur kommerziellen Verwendung angebotene Algorithmen mit entsprechenden Daten zu trainieren. Solche Algorithmen werden auch als COTS (Components-Off-The-Shelf) bezeichnet. Es hat sich herausgestellt, dass die Struktur, also bei künstlichen neuronalen Netzen beispielsweise die Anzahl der Neuronen oder die Zahl der Schichten, irrelevant für das Detektieren der Ereignisse ist, solange ein Mindestgrad an Komplexität erreicht ist. Insbesondere eignen sich solche Modelle, die auch in öffentlichen Benchmarks gut abschneiden. Beispielhaft seien als Benchmarks der "COCO dev-test" oder der "COCO val2017" genannt. Beispielhafte seien Modelle genannt, die auf dem DINO (DETR with Improved deNoising anchOr box) Algorithmus oder dem YOLO (You Only Look Once) Algorithmus basieren.

In "Tianhe Ren, Jianwei Yang, Shilong Liu, Ailing Zeng, Feng Li, Hao Zhang, Hongyang Li, Zhaoyang Zeng, Lei Zhang. A Strong and Reproducible Object Detector with Only Public Datasets. arXiv:2304.13027 [cs.CV]. (https://doi.org/10.48550/arXiv.2304.13027)" und "Hao Zhang, Feng Li, Shilong Liu, Lei Zhang, Hang Su, Jun Zhu, Lionel M. Ni, Heung-Yeung Shum. DINO: DETR with Improved DeNoising Anchor Boxes for End-to-End Object Detection. arXiv:2203.03605 [cs.CV]. (https://doi.org/10.48550/arXiv.2203.03605)" sind Beispiele für die Modelle offenbart.

Bevorzugt wird jedoch das Modell oder zumindest ein (Teil-) Modell als künstliches neuronales Netz ausgeführt. Das künstliche neuronale Netz kann beispielsweise auf der Transformertechnologie beruhen und/oder ein faltendes (convolutional) künstliches neuronales Netz sein bzw. umfassen.

Wird ein einziges Modell ohne Teil-Modelle verwendet, so erkennt dieses bevorzugt alle potentiell auftretenden Ereignisse. Werden mehrere Teil-Modelle genutzt, können die einzelnen Teil-Modelle beispielsweise verschiedene Ereigniskategorien detektieren. Ereigniskategorien können natürliche Geräusche, harmonische Geräusche oder Kurzzeitereignisse sein. Es lassen sich aber auch beliebige andere Ereigniskategorien finden.

D.h. zum Training von Teilmodellen können die Trainingsdaten beispielsweise durch Verwendung unterschiedlicher Arten von Ereignissignalen erzeugt werden. Ein Teilmodell wird dann beispielsweise auf FM-Signale, ein Teilmodell auf CW-Signale und ein Teilmodell auf Biosignale trainiert, um nur ein mögliches Beispiel zu nennen. Generell können die Teilmodelle beliebig gewählt und trainiert werden.

Als Trainingsdaten eignen sich die nach dem beschriebenen Verfahren erzeugten künstlichen Trainingsdaten. Diese können durch reale Sonardaten ergänzt werden. Reale Sonardaten können bei Trainingsfahrten, Trainingsmanövern oder im Einsatz gewonnenen werden. Bevorzugt sind die Daten vorab, beispielsweise von einem ausgebildeten Sonaroperator, zu klassifizieren. D.h., die tatsächlichen Ereignisse in den Sonardaten werden vorab bestimmt. Dies wird als Labelling bezeichnet. Dies ermöglicht ein überwachtes Lernen des Modells.

Weitere Ausführungsbeispiele zeigen analog eine Datenverarbeitungseinheit zur Detektion von Ereignissen in Sonardaten, die die beschriebenen Verfahrensschritte ausführen kann.

Ferner ist ein System umfassend die Datenverarbeitungseinheit sowie einem Passivsonar zum (kontinuierlichen) Aufzeichnen der Sonardaten offenbart. Das Passivsonar stellt demnach die Sonardaten bereit, während die Datenverarbeitungseinheit die Datenverarbeitung, insbesondere auch das Anwenden des Modells auf die Sonardaten, durchführt.

Analog ist ein Computerprogramm umfassend Befehle offenbart, die bei der Ausführung des Programms durch einen Computer diesen veranlassen, das Verfahren zur Erstellung der synthetischen Trainingsdaten und/oder das Verfahren zum Detektieren der Ereignisse unter Verwendung von Sonardaten auszuführen.

Bevorzugte Ausführungsbeispiele der vorliegenden Erfindung werden nachfolgend Bezug nehmend auf die beiliegenden Zeichnungen erläutert. Es zeigen:
Fig. 1: ein schematisches Blockschaltbild eines Systems zur Detektion von Ereignissen in Sonardaten; und
Fig. 2: ein schematisches Blockschaltbild zur Erzeugung von Trainingsdaten zum Trainieren des Modells aus Fig. 1 mittels maschinellem Lernen.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

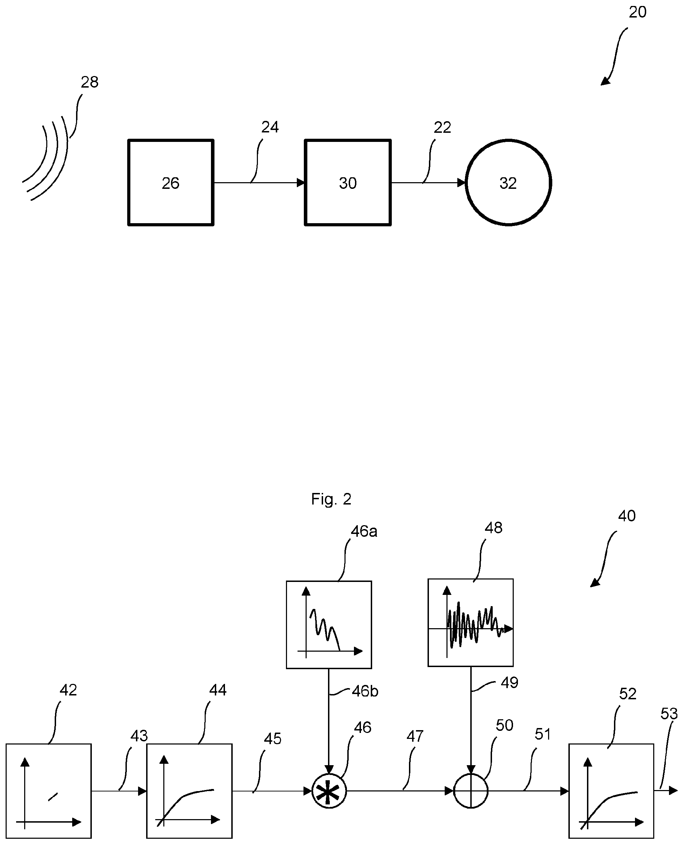

Fig. 1 zeigt ein schematisches Blockschaltbild eines Systems 20 zur Detektion von Ereignissen 22 in Sonardaten 24. Die Sonardaten 24 können mittels Wasserschallwandlern 26, d.h. einem Sonar, aus empfangenem Wasserschall 28 erzeugt werden. Eine Datenverarbeitungseinheit 30, d.h. beispielsweise ein Computer, verarbeitet die Sonardaten 24 und wendet ein mittels maschinellem Lernen trainiertes Modell zur Detektion der Ereignisse 22 auf die Sonardaten an. Das Ergebnis kann dann eine Darstellung 32 der Sonardaten 24 mit den darin enthaltenen Ereignissen 32 sein.

Fig. 2 offenbart eine schematische Blockdarstellung eines Verfahrens zum Erzeugen von Trainingsdaten für das in Fig. 1 beschriebene Modell. In den Blöcken ist jeweils beispielhaft eine Zeitdarstellung der verwendeten Daten dargestellt.

Block 42 stellt einen Schritt a) Erzeugen eines Signals 43 eines zu Detektierenden Ereignisses als Zeitreihe von Datenpunkten dar. Beispielhaft ist in dem Block ein FM-Signal als Ereignis dargestellt.

Optional wird in Block 44 Schritt a1) ausgeführt mit Anwenden einer nichtlinearen Gewichtung auf das Signal, um ein gewichtetes Signal 45 zu erhalten. Die nichtlineare Gewichtung kann durch Multiplikation einer nichtlinearen Funktion, beispielsweise der Umkehrfunktion eines Polynoms mit ausschließlich ungeraden Exponenten, mit dem Signal 43 erfolgen.

In Block 46 wird Schritt b) Falten des Signals 43 oder des gewichteten Signals 45 mit einer Abbildung eines in Block 46a erzeugten Sonarkanals 46b ausgeführt, um ein empfangenes Signal 47 zu simulieren.

In Block 48 wird Schritt c) Erzeugen eines Rauschsignals 49 ausgeführt.

In Block 50 wird Schritt d) Mischen des Rauschsignals 49 mit dem simulierten empfangenen Signal 47 um ein gemischtes Signal 51 zu erhalten ausgeführt.

In Block 51 wird Schritt e) Anwenden einer nichtlinearen Gewichtung auf das gemischte Signal 51, um die synthetischen Trainingsdaten 53 zu erhalten.

Die offenbarten (Wasser-) Schallwandler sind für den Einsatz unter Wasser, insbesondere im Meer, ausgelegt. Die Schallwandler können Wasserschall in ein dem Schalldruck entsprechendes elektrisches Signal (z.B. Spannung oder Strom), das (empfangene) Wasserschallsignal, umwandeln. Überdies ist es möglich, dass die Schallwandler eine anliegende elektrische Spannung in Wasserschall umwandeln können. Die elektrische Spannung kann einem vorgegebenen Muster folgen und dann als (zu sendendes) Sonarsignal bezeichnet werden, während der aus dem zu sendenden Sonarsignal resultierende Wasserschall als (gesendetes) Sonarsignal bezeichnet wird. Beispiele für Sonarsignale sind ein Chirp (frequenzmoduliertes Signal) oder als Spezialfall des Chirps ein Sweep (linear frequenzmoduliertes Signal). Die Schallwandler können demnach als Wasserschallempfänger und/oder als Wasserschallsender verwendet werden. Als sensorisches Material können die Schallwandler ein piezoelektrisches Material, beispielsweise eine Piezokeramik, aufweisen. Eine Mehrzahl von Wasserschallwandlern oder einer oder mehrere Wasserschallwandler in Verbindung mit einer Signalverarbeitungseinheit können als Sonarsystem bezeichnet werden. Die Schallwandler können für (Aktiv- und/oder Passiv-) Sonar (sound navigation and ranging, dt.: Schall-Navigation und - Entfernungsbestimmung) eingesetzt werden. Die Schallwandler sind bevorzugt nicht für medizinische Anwendungen geeignet bzw. werden nicht für medizinische Anwendungen eingesetzt. Ebenso werden die Schallwandler bevorzugt nicht für die Ultraschallprüfung von Werkstoffen verwendet oder sind nicht dazu geeignet.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

In Abhängigkeit von den Implementierungsanforderungen können Ausführungsbeispiele der Erfindung in Hardware oder in Software implementiert sein. Die Implementierung kann unter Verwendung eines digitalen Speichermediums, beispielsweise eines magnetischen oder optischen Speichers durchgeführt werden, auf dem elektronisch lesbare Steuersignale, z.B. ein Computerprogramm, gespeichert sind, die mit einem programmierbaren Computersystem (CPU und/oder GPU) derart zusammenwirken können oder zusammenwirken, dass das jeweilige Verfahren durchgeführt wird. Aus diesem Grund sollte das digitale Speichermedium computerlesbar sein. Ausführungsbeispiele können demnach einen Datenträger umfassen, der elektronisch lesbare Steuersignale aufweist, die in der Lage sind, mit einem programmierbaren Computersystem derart zusammenzuwirken, dass eines der hierin beschriebenen Verfahren durchgeführt wird.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) oder ein Grafikprozessor (GPU) sein oder für das Verfahren spezifische Hardware, wie beispielsweise ein ASIC. Auch eine verteilte Ausführung auf CPU und GPU ist möglich.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste:

- 20: System
- 22: Ereignis
- 24: Sonardaten
- 26: Wasserschallwandler / Passivsonar
- 28: Wasserschall
- 30: Datenverarbeitungseinheit
- 32: Sonarbild mit detektierten Ereignissen
- 40: Verfahren zum Erstellen der Trainingsdaten
- 42: Schritt a)
- 43: (Ereignis-) Signal
- 44: Schritt a1)
- 45: gewichtetes Signal
- 46: Schritt b)
- 46a: Erzeugen des Sonarkanals
- 46b: Sonarkanal
- 47: simuliertes empfangenes Signal
- 48: Schritt c)
- 49: Rauschsignal
- 50: Schritt d)
- 51: gemischtes Signal
- 52: Schritt e)
- 53: synthetisches Trainingssignal

## Patentansprüche

1. Verfahren (40) zur Erstellung von synthetischen Trainingsdaten (53) zum Trainieren eines Modells zur Detektion von Ereignissen (22) in Sonardaten (24) mittels maschinellem Lernen mit folgenden Schritten:
a) (42) Erzeugen eines Signals (43) eines zu detektierenden Ereignisses als Zeitreihe von Datenpunkten;
b) (46) Falten des Signals (43) mit einer Abbildung eines Sonarkanals um ein empfangenes Signal (47) zu simulieren;
c) (48) Erzeugen eines Rauschsignals (49);
d) (50) Mischen des Rauschsignals (49) mit dem simulierten empfangenen Signal (47) um ein gemischtes Signal (51) zu erhalten;
e) (52) Anwenden einer nichtlinearen Gewichtung auf das gemischte Signal (51) um die synthetischen Trainingsdaten (53) zu erhalten.

2. Verfahren (40) gemäß Anspruch 1, wobei zwischen Schritt a) (42) und Schritt b) (46) ein Schritt a1) (44) ausgeführt wird mit Anwenden einer nichtlinearen Gewichtung auf das Signal (43) um ein gewichtetes Signal (45) zu erhalten und wobei in Schritt b) (46) statt des Signals (43) das gewichtete Signal (45) verwendet wird.

3. Verfahren (40) gemäß einem der vorherigen Ansprüche, wobei in Schritt e) (52) eine im Wertebereich zunächst im Wesentlichen lineare, für betragsmäßig größer werdende Werte asymptotisch begrenzte oder nur sehr langsam ansteigende, monoton steigende Funktion als nichtlineare Gewichtung verwendet wird.

4. Verfahren (40) gemäß einem der vorherigen Ansprüche, wobei in Schritt b) (44) die Impulsantwort des Sonarkanals als Abbildung verwendet wird.

5. Verfahren (40) gemäß einem der vorherigen Ansprüche, wobei der Sonarkanal in Schritt b) (46) zufällig erzeugt oder zufällig ausgewählt wird.

6. Verfahren (40) gemäß einem der vorherigen Ansprüche, wobei in Schritt a) (42) ein künstlich generiertes Signal (43) verwendet wird.

7. Verfahren (40) gemäß einem der vorherigen Ansprüche, wobei in Schritt a) (42) ein aus realen Daten extrahiertes Signal (43) verwendet wird.

8. Verfahren zur Detektion von Ereignissen (22) in Sonardaten (24) mittels eines Modells, das mit den in einem der vorherigen Ansprüche erzeugten synthetischen Trainingsdaten (53) mittels maschinellem Lernen erzeugt worden ist, wobei die Detektion der Ereignisse (22) durch Anwenden des Modells auf eine Zeitreihe von Sonardaten (24) erfolgt.

9. Verfahren gemäß Anspruch 8, wobei zum maschinellen Lernen des Modells ergänzend reale Sonardaten verwendet werden.

10. Verfahren gemäß Anspruch 9, wobei der Anteil der realen Sonardaten in den gesamten Trainingsdaten maximal 10% beträgt.

11. Datenverarbeitungseinheit (30) zur Detektion von Ereignissen (22) in Sonardaten (24), wobei die Datenverarbeitungseinheit (30) ausgebildet ist, das Verfahren gemäß einem der Ansprüche 8 bis 10 auszuführen.

12. System (20) umfassend die Datenverarbeitungseinheit (30) gemäß Anspruch 11 sowie einem Passivsonar (26) zum Aufzeichnen der Sonardaten (24).

13. Computerprogramm umfassend Befehle, die bei der Ausführung des Programms durch einen Computer diesen veranlassen, das Verfahren gemäß einem der Ansprüche 1 bis 7 oder das Verfahren gemäß einem der Ansprüche 8 bis 10 unter Verwendung von Sonardaten auszuführen.

## Claims

1. Method (40) for generating synthetic training data (53) for training a model for the detection of events (22) in sonar data (24) by means of machine learning with the following steps:
a) (42) generating a signal (43) of an event to be detected as a time series of data points;
b) (46) convolving the signal (43) with a representation of a sonar channel in order to simulate a received signal (47);
c) (48) generating a noise signal (49);
d) (50) mixing the noise signal (49) with the simulated received signal (47) in order to obtain a mixed signal (51);
e) (52) applying a nonlinear weighting to the mixed signal (51) in order to obtain the synthetic training data (53).

2. Method (40) according to claim 1, wherein between step a) (42) and step b) (46) a step a1) (44) is carried out with applying a nonlinear weighting to the signal (43) in order to obtain a weighted signal (45), and wherein in step b) (46) the weighted signal (45) is used instead of the signal (43).

3. Method (40) according to one of the preceding claims, wherein in step e) (52) a monotonically increasing function is used as the nonlinear weighting, which is initially substantially linear in the value range and asymptotically limited or only very slowly increasing for values becoming greater in magnitude.

4. Method (40) according to one of the preceding claims, wherein in step b) (44) the impulse response of the sonar channel is used as the representation.

5. Method (40) according to one of the preceding claims, wherein the sonar channel in step b) (46) is generated randomly or selected randomly.

6. Method (40) according to one of the preceding claims, wherein in step a) (42) an artificially generated signal (43) is used.

7. Method (40) according to one of the preceding claims, wherein in step a) (42) a signal (43) extracted from real data is used.

8. Method for the detection of events (22) in sonar data (24) by means of a model that has been generated by means of machine learning with the synthetic training data (53) generated in one of the preceding claims, wherein the detection of the events (22) is carried out by applying the model to a time series of sonar data (24).

9. Method according to claim 8, wherein real sonar data are additionally used for machine learning of the model.

10. Method according to claim 9, wherein the proportion of the real sonar data in the entire training data is at most 10%.

11. Data processing unit (30) for the detection of events (22) in sonar data (24), wherein the data processing unit (30) is configured to carry out the method according to one of claims 8 to 10.

12. System (20) comprising the data processing unit (30) according to claim 11 and a passive sonar (26) for recording the sonar data (24).

13. Computer program comprising instructions which, when the program is executed by a computer, cause the computer to carry out the method according to one of claims 1 to 7 or the method according to one of claims 8 to 10 using sonar data.

## Revendications

1. Procédé (40) de création de données d'entraînement synthétiques (53) pour entraîner un modèle de détection d'événements (22) dans des données sonar (24) au moyen de l'apprentissage automatique avec les étapes suivantes :
a) (42) génération d'un signal (43) d'un événement à détecter en tant que série temporelle de points de données ;
b) (46) convolution du signal (43) avec une représentation d'un canal sonar afin de simuler un signal reçu (47) ;
c) (48) génération d'un signal de bruit (49) ;
d) (50) mélange du signal de bruit (49) avec le signal reçu simulé (47) afin d'obtenir un signal mélangé (51) ;
e) (52) application d'une pondération non linéaire au signal mélangé (51) afin d'obtenir les données d'entraînement synthétiques (53).

2. Procédé (40) selon la revendication 1, dans lequel entre l'étape a) (42) et l'étape b) (46) une étape a1) (44) est exécutée avec application d'une pondération non linéaire au signal (43) afin d'obtenir un signal pondéré (45) et dans lequel, à l'étape b) (46), le signal pondéré (45) est utilisé à la place du signal (43).

3. Procédé (40) selon l'une des revendications précédentes, dans lequel à l'étape e) (52) une fonction monotone croissante, d'abord essentiellement linéaire dans la plage de valeurs, asymptotiquement limitée ou n'augmentant que très lentement pour des valeurs devenant plus grandes en valeur absolue, est utilisée comme pondération non linéaire.

4. Procédé (40) selon l'une des revendications précédentes, dans lequel à l'étape b) (44) la réponse impulsionnelle du canal sonar est utilisée comme représentation.

5. Procédé (40) selon l'une des revendications précédentes, dans lequel le canal sonar est généré aléatoirement ou sélectionné aléatoirement à l'étape b) (46).

6. Procédé (40) selon l'une des revendications précédentes, dans lequel à l'étape a) (42) un signal (43) généré artificiellement est utilisé.

7. Procédé (40) selon l'une des revendications précédentes, dans lequel à l'étape a) (42) un signal (43) extrait de données réelles est utilisé.

8. Procédé de détection d'événements (22) dans des données sonar (24) au moyen d'un modèle qui a été généré au moyen de l'apprentissage automatique avec les données d'entraînement synthétiques (53) générées selon l'une des revendications précédentes, dans lequel la détection des événements (22) est effectuée par application du modèle à une série temporelle de données sonar (24).

9. Procédé selon la revendication 8, dans lequel des données sonar réelles sont en outre utilisées pour l'apprentissage automatique du modèle.

10. Procédé selon la revendication 9, dans lequel la proportion des données sonar réelles dans l'ensemble des données d'entraînement est au maximum de 10 %.

11. Unité de traitement de données (30) pour la détection d'événements (22) dans des données sonar (24), l'unité de traitement de données (30) étant configurée pour exécuter le procédé selon l'une des revendications 8 à 10.

12. Système (20) comprenant l'unité de traitement de données (30) selon la revendication 11 ainsi qu'un sonar passif (26) pour l'enregistrement des données sonar (24).

13. Programme d'ordinateur comprenant des instructions qui, lors de l'exécution du programme par un ordinateur, amènent celui-ci à exécuter le procédé selon l'une des revendications 1 à 7 ou le procédé selon l'une des revendications 8 à 10 en utilisant des données sonar.
